# EUROPEAN PATENT APPLICATION

(11) **EP 1 308 853 A1**
(43) Date of publication of application: **07.05.2003**
(21) Application number: 01410137.2
(22) Date of filing: 30.10.2001
(51) Int. Cl.: G06F 17/30

(54) **Data caching**

(71) Applicant: Hewlett-Packard Company, Palo Alto, CA 94304 (US)
(72) Inventor: Bruno, Richard, 38920 Crolles (FR); Gavrilovic, Remi, 51100 Reims (FR)
(74) Representative: Lloyd, Richard Graham (GB)

(57) **Abstract**

The present invention relates to the field of data changing, and in particular to improved data caching in a network environment. The present invention removes the need for a proxy cache when, for example, retreiving data from the Internet in a network environment. Instead of a proxy cache, unused disk space on each network terminal is used as a local cache (302a,...,n). Whenever data is retreived from the Internet by any terminal (300a,...,n), the data is cached on its local cache (302a,...,n), before being distributed to the other terminals (300a,...,n) on the network for storage on their local caches (302a,...,n).

## Description

### Field of the Invention

The present invention relates to the field of data caching, and in particular to improved data caching in a network environment.

### Background of the Invention

There exist many data caching techniques whose general aim is to improve the performance and efficiency of retrieving data, especially from remote devices. A remote device may be considered as any device which is connected to another device via a network or other indirect connection means. For example, a remote device may be a network terminal, a network server, an intranet server, an Internet gateway/server, etc.

In the field of Internet browsing, data caching is commonplace. Data caching typically reduces the time taken to access information (for information which is already cached) and reduces the amount of information which needs to sourced from the Internet, saving both time and money.

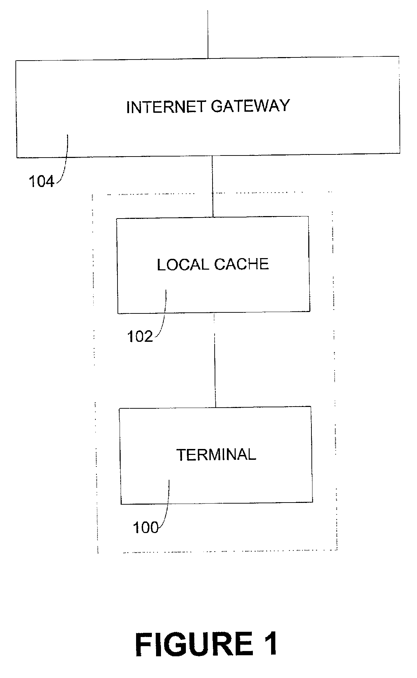

Figure 1 is a block diagram showing an overview of an Internet browsing system employing a local data cache. A user terminal 100 has an associated local data cache 102. The local cache 102 may be integral to the terminal 100. Whenever data on the Internet is requested by the user terminal the local cache 102 is checked to see whether the requested data is already present in the local cache 102. If the requested data is present in the local cache 102 the data is sourced therefrom, otherwise the data is retrieved from the Internet via an Internet gateway 104. Each time data is retrieved from the Internet the data is, where possible, stored on the local cache. In this way, frequently requested data may be retrieved locally, without having to pass through the Internet gateway.

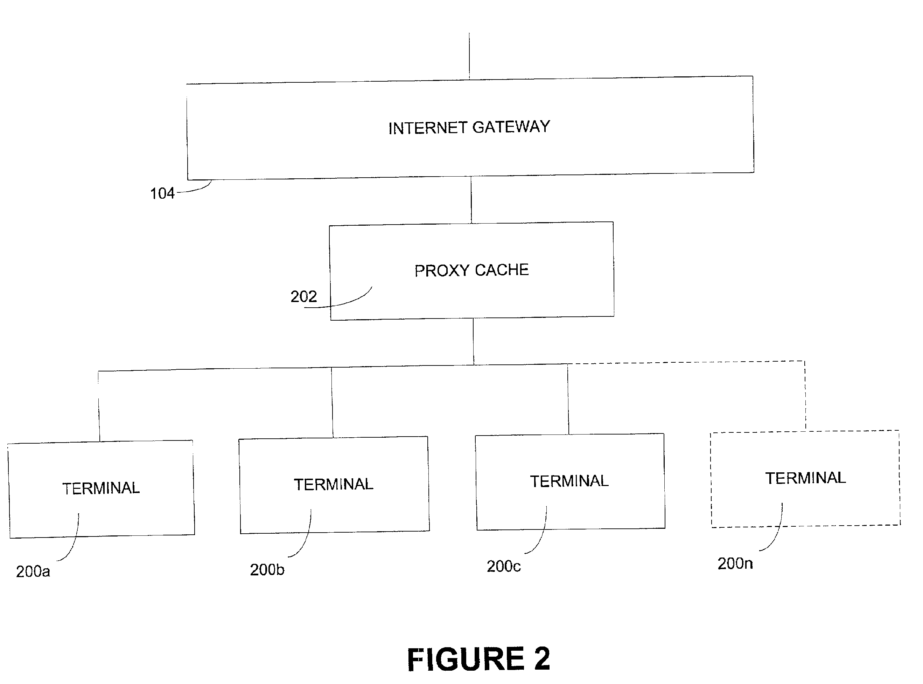

Data caching may also exist on a system level, for example, within a network environment. Figure 2 is a block diagram showing an overview of an Internet browsing system employing a proxy data cache according to the prior art. In Figure 2 a number of terminals 200a to 200n are shown which access the Internet via a proxy cache 202 and an Internet gateway 104. A proxy cache is a large storage facility, typically a hard disk having a storage capacity of many giga or tera bytes, depending on the size of the network and the type of usage. Whenever data is retrieved from the Internet a copy of the data is also stored in the proxy cache. Prior to requesting data from the Internet the proxy cache 202 is checked to see whether the requested data is present in the proxy cache 202. If the requested data is present in the proxy cache 202 the data is sourced therefrom, otherwise the data is requested from the Internet via the Internet gateway 104.

Local caches are only effective at reducing the amount of data retrieved from the Internet where the same data is requested more than once by a user terminal. If the same data is requested from a different user terminal, which has not previously requested that data, it will be necessary to retrieve the data from the Internet. Proxy caches improve on this situation in that data previously requested by any user terminal in a network will be available to any other user terminal, directly from the proxy cache.

Due to the large storage capacity requirements of proxy caches, they typically require expensive hardware which also requires additional maintenance and administration. Proxy caches are generally only economically viable in large corporate environments.

### Summary of the Invention

One aim of the present invention is to remove the need for a proxy cache for network environments, whilst still retaining the benefits of efficient data caching.

According to a first aspect of the present invention, there is provided a method of retrieving data at a remote device from a first terminal, wherein the first terminal is connected to a network comprising at least a second terminal, and further wherein each of the terminals includes a local cache, the method comprising: requesting from the first terminal data at the remote device; determining the availability of the requested information in the local cache of the first terminal; retrieving the requested data from the remote device when it is determined that the requested data is not available in the local cache of the first terminal; and distributing the retrieved data to at least the second terminal.

According to a second aspect of the present invention, there is provided a method of preemptively caching data on terminals in a network of terminals, wherein each terminal includes a local cache,
the method comprising: selecting data to be preemptively cached; selecting at least one of the terminals; and distributing the selected data to the selected terminals for storage on their respective local caches.

According to a third aspect of the present invention, there is provided a method of retrieving data at a remote device from a first terminal, wherein the first terminal is connected to a network comprising at least a second terminal, and further wherein each of the terminals includes a local cache, comprising: requesting from the first terminal data at the remote device; determining the availability of the requested information in the local cache of the first terminal; retrieving the requested data from the remote device when it is determined that the requested data is not available in the local cache of the first terminal; storing the retrieved data in the local cache of the first terminal; distributing the retrieved data to at least the second terminal; receiving unsolicited data from other terminals in the network; and storing the received unsolicited data in the local cache.

According to a fourth aspect of the present invention, there is provided a terminal for retrieving data at a remote device, wherein the terminal is connected to a network comprising at least a second terminal, and further wherein each of the terminals includes a local cache, the terminal comprising: means for requesting data at the remote device; means for determining the availability of the requested information in the local cache; means for retrieving the requested data from the remote device when it is determined that the requested data is not available in the local cache; and means for distributing the retrieved data to at least the second terminal.

Advantageously, by distributing retrieved data in an unsolicited manner to other terminals in the network effectively preemptively caches data locally, leading to potential reductions in data access times and increasing the amount of data which can be sourced locally. Consequently, less data needs to be sourced from the remote device.

### Brief Description of the Invention

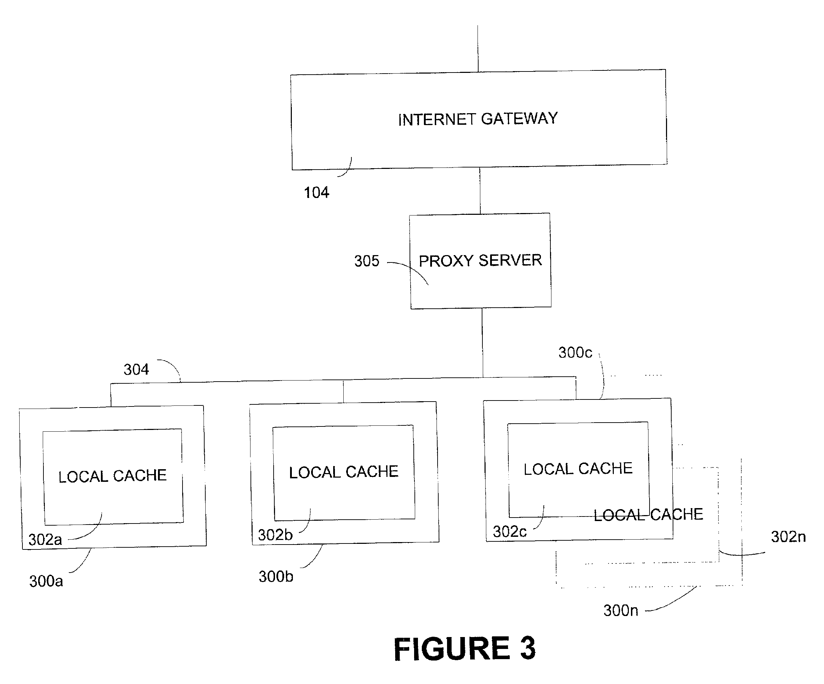

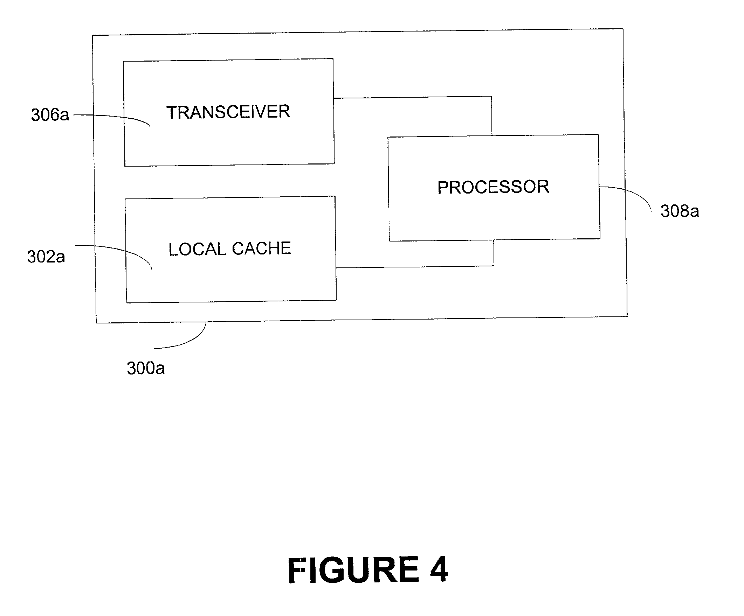

An example embodying the invention will now be described, by way of non-limiting example, with reference to the accompanying drawings, in which
. Figure 1 is a block diagram showing an overview of an Internet browsing system employing a local data cache according to the prior art;
. Figure 2 is a block diagram showing an overview of an Internet browsing system employing a proxy data cache according to the prior art;
. Figure 3 is a block diagram showing a system according to an embodiment of present invention; and
. Figure 4 is a block diagram showing a user terminal of Figure 3 in greater detail.

### Best Mode of Carrying out the Invention

Figure 3 is a block diagram showing a system according to one embodiment of the present invention. A number of user terminals 300a to 300n are shown, each having an associated local cache, 302a to 302n respectively. Preferably each local cache is integral to its respective terminal, although the local cache may equally be external to each terminal. The terminals 300a to 300n are connected via a network 304 and a proxy server 305 through which each terminal 300a to 300n may access the Internet gateway 104.

Additionally, each terminal may communicate with the other terminals on the network, as will be appreciated by those skilled in the art.

For clarity it is important to note that a proxy server is not the same as to a proxy cache. A proxy server is generally used for security purposes and for preventing unauthorized access to the devices connected behind the proxy server. A proxy cache, as previously described, is a large storage capability used for caching of data.

As previously described, whenever Internet data is requested by a user terminal its local cache is first checked to see whether the requested data is already present therein. If the requested data is present in the local cache the data is sourced therefrom, otherwise the data is retrieved from the Internet via the Internet gateway 104.

Whenever data is retrieved from the Internet the data is, where possible, stored in the local cache. Advantageously, in addition to simply storing data retrieved from the Internet in the local cache of the user terminal which requested the data, the retrieved data is also sent to the local caches of other user terminals on the network. For example, if the user terminal 300a requests data which is not present its local cache 302a, the data will be retrieved from the Internet, via the Internet gateway 104. Once the retrieved data has been stored in the local cache 302a, the retrieved data is also distributed by the user terminal 300a to user terminals 302b to 302n for storage in their respective local caches 302b to 302n. Subsequently, should any of the other user terminals 300b to 300n request the same data, the data will be able to be sourced locally from their respective local caches, without having to retrieve the data from the Internet via the Internet gateway 104.

It should be noted that the data distributed to the other user terminals in the network is unsolicited in nature, i.e. the data which is received at the other user terminals has not been specifically requested by those terminals.

In a preferred embodiment, the local caches are situated on the existing hard disks of user terminals, without requiring any additional computer hardware. This is possible since the local cache can make use of any unused space on the local hard disks.

The size of each local cache is preferably dynamic to adapt to the changing requirements of individual hard disks. It is preferable for the local cache not to occupy all of the unused space on an individual hard disk, in order to allow other applications sufficient disk space. Preferably, the amount of unused space on a hard disk is frequently monitored and the size of the local cache adjusted accordingly. For example, in the event that the amount of unused space has reduced it is possible to reduce the size of the local cache. Conversely, if the amount of unused space is increased it is possible to increase the size of the local cache to take maximum advantage of the available disk space.

In a further embodiment, the proxy server 305 may additionally include a proxy cache, for system level caching. This combination of a proxy server and the local caches can advantageously further improve data access performance. Due to the large size of the proxy cache, data which has already been removed or overwritten on the local caches may still be present on the proxy cache. Therefore, further requests for such data will still be able to be sourced from the proxy cache, thereby reducing the number of requests having to pass through the Internet gateway 104.

The retrieved data may be transmitted from one user terminal to the other user terminals using a variety of known methods, including multicast via a multicast channel.

Figure 4 is a block diagram showing a user terminal, such as the user terminal 300a, in greater detail. The user terminal 300a, as previously mentioned, includes a local cache 302a. The user terminal 300a also has a transceiver 306a for communicating with the network 304 of Figure 3. A transceiver is herein defined as a means for receiving and transmitting signals and data for the purposes of communication. A transceiver may be, for example, a network adapter, a modem or other suitable means. A transceiver may be either a combined receiver/transmitter, or may comprise separate reception and transmission means.

A processor 308a controls both the transceiver 306a and the local cache 302a. The processor 308a controls the distribution of data retrieved from the Internet to the other user terminals on the network 304, as well as controlling the storage of such data received from other user terminals on the local cache 302a. Preferably the distribution of data also includes additional parameters, including, for example, data and time of request, valid until date, etc.

Due to the dynamic nature and generally limited size of the local caches, conventional data replacement algorithms may be used to optimize the efficiency of the caches. Such algorithms may include, for example, least recently used (LRU) and least frequently used (LFU), which will be familiar to those skilled in the art. It is for this reason that it is preferable to include the above-mentioned additional parameters when transmitting data to other user terminals. The processor of each user terminal controls the content of its respective local cache, and is also responsible for implementing an appropriate data replacement algorithm. In one embodiment preference is given to storing and maintaining large files on each local cache. Large files take longer to download than smaller files, therefore greater performance benefit can be achieved if these files are stored locally, rather than having to be retrieved from the Internet.

One reason why proxy caches are effective in reducing the amount of data which needs to be sourced from the Internet is due in part to two main factors. The first is their large storage capacity. The second is that they typically serve a large number of users with similar data requirements. This helps to ensure that, statistically, the most commonly requested data has a higher chance of having been previously requested and hence stored on the proxy cache. However, if each of the users served by a proxy cache request information which is not representative of the type of information requested by the other users, it is unlikely that such data will have been previously stored on the proxy cache.

In a preferred embodiment the type of retrieved data which is stored on a local cache and subsequently distributed to the other user terminals is limited. This is particularly important where the local cache resides on an existing hard disk which may have a limited available capacity.

For example in a corporate network of an electronics company, the type of data for storage and subsequent distribution may be limited to only information relating to electronics. This may be achieved by, for example, key word searching, filtering, or identifying content identifiers embedded in the data. Alternatively, the type of data may be limited to data from a predetermined list of Internet addresses. Reducing the diversity of information available in each local cache to specific areas improves the probability that information from those areas will be present in the local cache.

In yet a further embodiment, groups of users or user terminals on a network may be arranged into 'communities'. For example, in a large corporate network, employees in, say, an engineering department may be grouped into an 'engineering community'. Similarly, employees in, say, a legal department, may be grouped into a 'legal community'. User terminals in each community may be arranged to only distribute data retrieved from the Internet amongst members of the same community. User terminals can, if required, belong to more than one community and thereby can distribute and receive data relating to different areas.

The communities may be determined, for example, by a system administrator or, alternatively, by user definable parameters. Where communities are determined by a system administrator different communities may be arranged into different multicast groups. This ensures that retrieved data is only distributed to communities likely to be interested in such data. Multicast is a bandwidth efficient way of distributing data to multiple user terminals.

Where the communities are determined by user definable parameters, the retrieved data is sent to all user terminals. A filter (not shown) at each user terminal determines, according to the set of user definable parameters, which data should be stored in the cache. The filtering may be based, for example, on content identifiers associated with the retrieved data, on keyword searching, or other known techniques.

In a yet still further embodiment, a system administrator may preemptively cache software components or programs which are to be installed or executed on other user terminals. For example, a system administrator may wish to install new software components or software updates on some or all of the user terminals in a given network. The system administrator can force the distribution of the required software components to some or all of the user terminals in the network, for storage in their respective local caches. The distribution of the software components can take place in accordance with the methods described above. Subsequently, when a user of a user terminal wishes to install the required software components, the user terminal is able to access the software components from the local cache. This can lead to a large reduction in network traffic compared to traditional systems whereby each user terminal has to download the software components to be installed from a central server.

In yet another embodiment, the preemptive caching of data may be performed in accordance with a predetermined schedule. For example, every morning a predetermined set of data may be preemptively cached on the local caches in the network, thereby allowing each user terminal to access the data directly. For example, in a corporate environment, preemptive caching of the companies stock prices could be performed.

All forms of data can be cached and distributed to other user terminals. Such data can include Internet (web) pages, multimedia files, software updates (patches), executable files, etc. Those skilled in the art will also appreciate that certain data may not be cacheable, or may not be beneficial to cache; for example, dynamically generated data, encrypted data, data marked as being non-cacheable etc.

The present invention is not limited to use with the Internet, and may be adapted for use with private networks, intranets, and other network configurations, without detracting from the inventive concepts described herein.

## Claims

1. A method of retrieving data at a remote device from a first terminal, wherein the first terminal is connected to a network comprising at least a second terminal, and further wherein each of the terminals includes a local cache,
the method comprising:
requesting from the first terminal data at the remote device;
determining the availability of the requested information in the local cache of the first terminal;
retrieving the requested data from the remote device when it is determined that the requested data is not available in the local cache of the first terminal; and
distributing the retrieved data to at least the second terminal.

2. The method of claim 1, further comprising storing the retrieved data in the local cache of the first terminal.

3. The method of claim 1 or 2, further comprising the steps of receiving unsolicited data from other terminals in the network and storing the received unsolicited data in the local cache.

4. The method of claim 1, 2 or 3, wherein groups of terminals in the network are arranged into groups of communities, and wherein the step of distributing is adapted for distributing the retrieved information to terminals in the same community.

5. The method of any previous claim, wherein the local cache is situated on the existing hard disk the terminal, and further comprising the step of monitoring the available space on the existing hard disk and adjusting the size of the local cache in accordance with the amount of available space.

6. A method of preemptively caching data on terminals in a network of terminals, wherein each terminal includes a local cache,
the method comprising:
selecting data to be preemptively cached;
selecting at least one of the terminals; and
distributing the selected data to the selected terminals for storage on their respective local caches.

7. A method of retrieving data at a remote device from a first terminal, wherein the first terminal is connected to a network comprising at least a second terminal, and further wherein each of the terminals includes a local cache, comprising:
requesting from the first terminal data at the remote device;
determining the availability of the requested information in the local cache of the first terminal;
retrieving the requested data from the remote device when it is determined that the requested data is not available in the local cache of the first terminal;
storing the retrieved data in the local cache of the first terminal;
distributing the retrieved data to at least the second terminal;
receiving unsolicited data from other terminals in the network; and storing the received unsolicited data in the local cache.

8. A terminal for retrieving data at a remote device, wherein the terminal is connected to a network comprising at least a second terminal, and further wherein each of the terminals includes a local cache, the terminal comprising:
means for requesting data at the remote device;
means for determining the availability of the requested information in the local cache;
means for retrieving the requested data from the remote device when it is determined that the requested data is not available in the local cache; and
means for distributing the retrieved data to at least the second terminal.

9. A terminal operating in accordance with the method of any of claims 1 to 7.

10. A network comprising a plurality of terminals as claimed in claim 8 or 9.
